# FASCICULE DE BREVET EUROPEEN

(11) **EP 2 155 462 B1**
(45) Date de publication et mention de la délivrance du brevet: **15.10.2014**
(21) Numéro de dépôt: 08805808.6
(22) Date de dépôt: 19.05.2008
(51) Int. Cl.: B29C 45/14, B60J 1/00

(54) **PROCEDE ET DISPOSITIF DE SURMOULAGE D'UN ELEMENT VITRE PAR UNE PORTION DE JOINT COMPORTANT UN INSERT ET VITRAGE**
VERFAHREN UND VORRICHTUNG ZUR ÜBERFORMUNG EINES GLASELEMENTS MITHILFE EINES NAHTTEILS MIT EINEM EINSATZ SOWIE GLASTAFEL
METHOD AND DEVICE FOR OVERMOULDING A GLASS ELEMENT USING A SEAM PORTION INCLUDING AN INSERT AND GLASS PANEL

(30) Priorité: 21.05.2007 FR 0755166
(43) Date de publication de la demande: 24.02.2010
(73) Titulaire: Saint-Gobain Glass France, 92400 Courbevoie (FR)
(72) Inventeur: BODIN, Cédric, F-60150 Coudun (FR); ROZE, Jean-Pierre, F-60290 Cauffry (FR); MOTTELET, Béatrice, F-60200 Compiegne (FR); MACHIZAUD, Yoann, F-60200 Compiegne (FR)
(74) Mandataire: Jamet, Vincent
(86) Numéro de dépôt international: PCT/FR2008/050862
(87) Numéro de publication internationale: WO 2008/145938

(56) Documents cités:
- EP-B- 0 468 713
- JP-A- 1 178 422
- US-A- 4 723 809

## Description

La présente invention porte sur un procédé de surmoulage d'au moins une portion de joint formée d'une matière plastique, telle que le polyuréthane, sur une partie périphérique d'un élément vitré, ledit joint comportant au moins un insert, cet insert présentant une portion surmoulée positionnée à l'intérieur dudit joint et une portion saillante faisant saillie à l'extérieur dudit joint pour le prépositionnement, le positionnement ou la fixation de l'élément vitré dans une baie qu'il doit fermer et notamment une baie de carrosserie de véhicule.

La portion surmoulée de l'insert comprend de manière habituelle une semelle en général de forme sensiblement plate et ladite portion saillante est orientée selon un axe.

Le procédé comporte d'une manière habituelle :
a- une étape de positionnement de ladite zone périphérique au moins de l'élément vitré dans un moule comportant au moins une partie mobile de moule et au moins une autre partie de moule qui peut être fixe, voire mobile,
b- une étape de positionnement d'au moins un insert dans le moule de manière que la partie saillante soit positionnée dans un logement formé dans une partie de moule,
c- une étape de fermeture de ladite partie mobile sur une partie fixe de moule de manière à former une cavité de moulage, ladite semelle étant située dans ladite cavité de moulage,
d- une étape d'injection de la matière plastique formant le joint dans ladite cavité de moulage et
e- une étape de démoulage par déplacement de ladite partie mobile de moule selon un axe de démoulage orienté différemment de l'axe de la partie saillante.

La présente invention porte également sur le dispositif mettant un oeuvre un procédé de ce type, sur le vitrage ainsi équipé de son surmoulage renfermant au moins un tel insert et sur un tel insert.

Le surmoulage peut entourer toute la bordure du vitrage, c'est-à-dire contre le chant du vitrage et sur le bord de deux surfaces principales opposées, auquel cas on désigne généralement le surmoulage comme étant l'« encapsulat » et l'opération de surmoulage, comme étant l'« encapsulation ». Toutefois, dans certains vitrages, la matière plastique est disposée seulement sur un bord d'une face du vitrage ou seulement une partie de celui-ci ou sur tout ou partie d'un bord d'une face du vitrage et contre le chant de celui-ci. Dans la suite de cette description, on a donc conservé l'emploi du terme « surmoulage », considéré comme englobant également l'encapsulation.

A titre d'exemples de ces vitrages, on cite les vitrages latéraux fixes d'automobiles ou les vitrages d'angle fixes d'automobiles destinés notamment à être appliqués contre la carrosserie de l'automobile par l'extérieur et à être fixés à celle-ci par vissage depuis l'intérieur. A cet effet, les parties des inserts qui font saillie à partir du surmoulage sur une face du vitrage sont généralement constituées par des tiges destinées à venir traverser des trous pratiqués dans la carrosserie, et qui, pour la plus grande partie, sont filetées afin de coopérer avec des écrous introduits du côté interne de celle-ci, et pour la partie restante, sont lisses, pour constituer des plots de prépositionnement ou de positionnement.

Les inserts actuellement utilisés sont constitués par des plaques ou semelles traversées dans leur partie centrale par des vis dont la tête vient s'appliquer et se fixer par tout moyen contre une face de la plaque et dont la tige fait saillie à partir de l'autre face, perpendiculairement à la plaque.

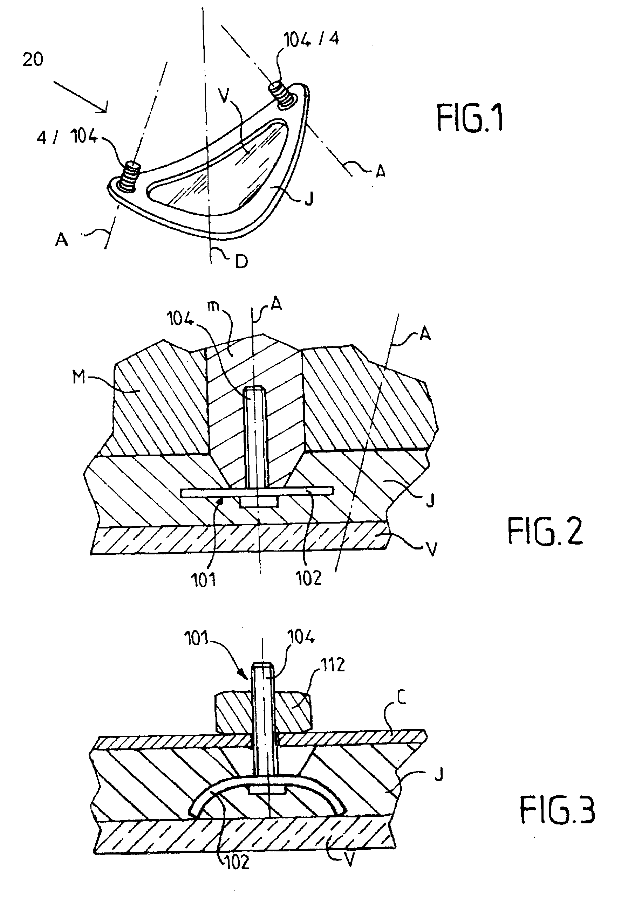

La Figure 1 annexée montre en perspective un élément vitré V, galbé, muni de son joint surmoulé dans lequel sont disposés deux inserts situés dans deux angles opposés du vitrage et dont on peut voir les tiges filetées saillantes 104. Un plus grand nombre d'inserts sera la plupart du temps nécessaire.

Par ailleurs, on a noté sur la Figure 1 l'axe de démoulage D et les deux axes A des parties saillantes des deux inserts. Ceux-ci étant situés dans deux angles opposés du vitrage, les axes des tiges filetées illustrées sont les axes de parties saillantes les plus inclinés par rapport à l'axe de démoulage. En effet, compte tenu du fait que le vitrage est cintré, les axes des tiges filetées sont inclinés par rapport à l'axe de démoulage et cette inclinaison dépend de la position de l'insert dans le surmoulage.

L'art antérieur connaît de la demande de brevet européen N° EP 468 713 un procédé de surmoulage sur un élément vitré plat d'un joint muni d'un insert à embase présentant une bague en caoutchouc.

Dans ce document, du fait que l'élément vitré est plat, l'axe de la partie saillante est parallèle à l'axe de démoulage.

Ce procédé n'est donc pas applicable au surmoulage d'un point sur un élément vitré bombé.

En outre, ce procédé ne donne pas satisfaction car il est difficile de maîtriser dans le temps l'élasticité de la bague qui doit être à la fois suffisamment souple pour assurer l'étanchéité tout en étant suffisamment rigide pour bien positionner la partie saillante et donc l'insert dans l'encapsulat.

L'art antérieur connaît aussi du brevet américain N° US 4,723,809, un procédé de surmoulage sur un élément vitré plat d'un joint muni d'un insert à embase.

Cette embase présente une face supportant la partie saillante qui n'est pas libre car elle est recouverte de la matière plastique formant le joint.

Par ailleurs, l'insert ne présente pas de moyens de positionnement particuliers permettant son indexation dans le référentiel du surmoulage.

Actuellement la plupart des vitrages pour véhicule sont au moins légèrement bombés ou galbés, voire même franchement bombés et pour permettre le maintien des inserts pendant l'injection de la matière plastique de surmoulage, ainsi que le démoulage du vitrage bombé après surmoulage, on utilise des moules complexes à pavés mobiles car, comme indiqué ci-dessus, l'axe des parties saillantes des inserts est alors différent de l'axe de démoulage. Chaque partie mobile présente ainsi deux positions extrêmes, une position de maintien de l'insert pendant l'injection de la matière plastique et une position rétractée dans laquelle elle n'est plus en contact avec l'insert, afin de permettre l'ouverture du moule sans être gêné par la partie saillante de l'insert.

En outre, un creux, souvent conique, est généralement aménagé dans le surmoulage autour de la partie saillante pour réaliser l'étanchéité de l'insert sur la semelle, autrement dit pour empêcher la matière plastique fluide d'atteindre la partie saillante afin de ne pas abîmer celle-ci.

Les Figures 2 et 3 illustrent ainsi l'insert connu. Sur la Figure 2, on peut voir la partie supérieure du moule M renfermant l'élément vitré V avec son surmoulage avant démoulage dans la région d'un insert 101, lequel est indexé dans le moule M et dont la tige filetée saillante 104 est coiffée par un pavé mobile m qui est mobile selon l'axe A par rapport au moule M. Le pavé mobile m se termine suivant une partie s'effilant en direction de son extrémité contre laquelle s'applique la semelle 102 de l'insert 101 par sa partie centrale. En position moulée, la semelle 102 de l'insert 101, noyée par toute sa bordure dans le surmoulage du joint J, se situe donc dans un plan horizontal médian de ce dernier.

Si l'on se réfère maintenant à la Figure 3, on peut voir que l'on a représenté le système illustré sur la Figure 2 en place sur une carrosserie C, un écrou de serrage 112 coopérant avec la tige filetée 104 de l'insert 101 en vue la fixation du vitrage dans la baie qu'il doit fermer. Sur cette Figure 3, on a représenté la tige filetée en situation de serrage extrême, où l'on peut voir que du fait de ce serrage, la semelle 102 s'est pliée en « chapeau de gendarme », ses deux bordures opposées selon la ligne moyenne de la semelle venant alors en appui dur sur le verre, risquant de casser celui-ci.

Avec cette structure connue, il arrive aussi assez souvent que l'insert sorte du surmoulage au moment de la fixation de la partie saillante sur la baie si une traction trop forte est opérée sur la partie saillante de l'insert. Le serrage s'effectue en effet sur la matière plastique du joint.

Par ailleurs, on peut également voir sur la Figure 3 que l'étanchéité du joint surmoulé autour de la partie filetée 104 de l'insert 101 n'est pas parfaitement assurée, d'où les difficultés indiquées plus haut.

En résumé, le système actuel présente de nombreux inconvénients :
- il n'est pas aisé de bien positionner les inserts lors du moulage car ceux-ci n'ont pas de points d'appui fixes dans le moule ; or un mauvais positionnement d'un seul des inserts d'une pièce, à savoir aussi bien une mauvaise position de l'axe de la partie saillante qu'une mauvaise hauteur d'enfoncement de l'insert peut conduire à un arrachage de l'insert en question lors du démoulage ou lors du vissage et rendre la pièce entière défectueuse ;
- lors du vissage, l'insert est très sollicité et peut être amené à basculer et à se plier, venant exercer des contraintes sur le verre conduisant à la casse de celui-ci ;
- l'étanchéité des tiges filetées des inserts lors du moulage n'est pas parfaitement assurée, il arrive ainsi que la matière plastique - généralement du polyuréthane fluide - parvienne à atteindre les filetages, ce qui doit être évité ; en effet, si les filetages sont abîmés, il se présentera des difficultés de fixation, conduisant ainsi à une pièce défectueuse ;
- l'étanchéité de l'assemblage final n'est pas non plus parfaitement assurée autour de la tige filetée de l'insert ;
- le moule est compliqué de part la présence de pavés mobiles et le démoulage n'est donc pas aisé.

Le déposant a donc recherché une solution à au moins l'un des problèmes posés, à savoir :
- réduire le coût élevé des moules à pavé(s) mobile(s), utilisés normalement pour le surmoulage avec insert(s) saillant(s) sur des éléments vitrés galbés ;
- améliorer la coopération de l'assemblage entre le vitrage et la baie, afin qu'une traction forte sur la partie saillante de l'insert ne provoque pas son déchaussement ;
- améliorer le positionnement de la partie saillante, notamment son inclinaison par rapport à l'axe de démoulage dans le cas des vitrages galbés ;
- améliorer la configuration du moulage, afin de minimiser les opérations de finition, et, en particulier, l'ébavurage, après surmoulage ; et
- améliorer l'étanchéité autour de la vis de l'insert tant pendant le moulage qu'après.

A cet effet, il est proposé, conformément à la présente invention, un système permettant notamment :
- un bon positionnement dans le moule grâce à au moins une, et de préférence plusieurs, patte(s) d'appui sur le verre et grâce à des moyens d'indexation constitués notamment d'échancrures ou de découpes qui correspondent avec des plots du moule, ces échancrures ou découpes pouvant être les plus écartées possible ;
- une suppression des contraintes sur le verre du fait de la souplesse de la ou des patte(s) d'appui et de leur(s) surface(s) de contact particulière(s) avec le verre ;
- un moule sans pavé mobile ;
- une bonne étanchéité par serrage non plus sur la matiere plastique du surmoulage mais entre un épaulement de l'insert - qui affleure la surface du surmoulage ou *dépasse de celle-ci -* et les parties du moule en regard pour réserver des volumes sans matière plastique afin de permettre un démoulage facile de l'axe de l'insert ;
- un bon ancrage de l'insert dans le surmoulage.

La présente invention se rapporte ainsi à un procédé de surmoulage d'au moins une portion de joint formée d'une matière plastique sur une partie périphérique d'un élément vitré, ledit joint comportant au moins un insert, cet insert présentant une portion surmoulée positionnée à l'intérieur dudit joint et une portion saillante faisant saillie à l'extérieur dudit joint pour le prépositionnement, le positionnement ou la fixation de l'élément vitré dans une baie qu'il doit fermer, ladite portion surmoulée comprenant une semelle (notamment de forme sensiblement plate) et ladite portion saillante étant orientée selon un axe, ledit procédé comportant :
a- une étape de positionnement de ladite zone périphérique au moins de l'élément vitré dans un moule comportant au moins une partie mobile de moule et au moins une autre partie de moule (qui peut être fixe, voire mobile),
b- une étape de positionnement d'au moins un insert dans le moule de manière que la partie saillante soit disposée dans un logement formé dans une partie de moule,
c- une étape de fermeture de ladite partie mobile sur une partie fixe de moule de manière à former une cavité de moulage, ladite semelle étant située dans ladite cavité de moulage,
d- une étape d'injection de la matière plastique formant le joint dans ladite cavité de moulage et
e- une étape de démoulage par déplacement de ladite partie mobile de moule selon un axe de démoulage orienté différemment de l'axe de la partie saillante,
le procédé selon l'invention étant remarquable en ce que pendant l'injection l'insert est positionné dans la cavité de moulage à l'aide d'au moins une broche coopérant avec un moyen de positionnement (ou d'indexation) situés sur ladite partie surmoulée de manière à ce que ladite semelle comporte sur une face tournée vers l'élément vitré au moins une patte d'appui s'étendant en direction de l'élément vitré et venant en contact avec ce dernier et sur une face opposée (opposée à la face tournée vers l'élément vitré) une embase présentant une face libre supportant ladite partie saillante et qui n'est pas recouverte de la matière plastique formant le joint et en ce que pendant le démoulage l'ouverture du moule et le retrait du vitrage surmoulé est opéré sans que la partie saillante de l'insert ne vienne en contact (directement ou indirectement) avec la paroi dudit logement.

En outre, d'une manière préférée, pendant l'injection :
- l'axe de la partie saillante est orienté sensiblement perpendiculairement au plan moyen de la semelle ;
- ladite patte d'appui est en compression contre la surface de l'élément vitré ;
- la face libre de l'embase vient en appui étanche contre la paroi du moule autour du logement.

La présente invention porte également sur un dispositif, notamment pour la mise en oeuvre du procédé selon l'invention, pour le surmoulage d'au moins une portion de joint formée d'une matière plastique sur une partie périphérique d'un élément vitré, ledit joint comportant au moins un insert, cet insert présentant une portion surmoulée positionnée à l'intérieur dudit joint et une portion saillante faisant saillie à l'extérieur dudit joint pour le prépositionnement, le positionnement ou la fixation de l'élément vitré dans une baie qu'il doit fermer, ladite portion surmoulée comprenant une semelle et ladite portion saillante présentant un axe, ledit dispositif comportant :
i- un moule pour le positionnement de ladite zone périphérique au moins de l'élément vitré, ledit moule comportant au moins une partie mobile de moule qui est mobile selon un axe de démoulage par rapport à une autre partie de moule, lesdites parties de moule coopérant à l'état fermé pour former une cavité de moulage,
ii- une partie de moule comportant au moins un logement débouchant dans ladite cavité de moulage et accueillant ladite partie saillante de l'insert orientée selon un axe différent de l'axe de démoulage,
ledit dispositif étant remarquable en ce que ladite cavité de moulage comporte au moins une broche coopérant avec des moyens de positionnement situés sur ladite partie surmoulée de manière à ce qu'au moins une patte d'appui positionnée sur une face de ladite semelle tournée vers l'élément vitré s'étende en direction de l'élément vitré et entre en contact avec ce dernier lors de l'injection de la matière et que sur une face opposée de ladite semelle une embase présente une face libre supportant ladite partie saillante qui n'est pas recouverte de la matière plastique formant le joint et en ce que le logement est suffisamment grand pour permettre l'ouverture du moule et le retrait du vitrage surmoulé sans que la partie saillante de l'insert ne vienne en contact (directement ou indirectement) avec la paroi dudit logement.

Le logement, de préférence :
- est suffisamment grand pour permettre que l'axe de la partie saillante soit orienté sensiblement perpendiculairement au plan moyen de la semelle ;
- ne comporte pas de pavé mobile ;
- présente une forme cylindrique orientée selon l'axe de démoulage ;
- comporte un aimant ou un électroaimant ou un système d'aspiration pour le maintien de ladite partie saillante ;
- est formé dans la partie de moule mobile, mais peut éventuellement être formé dans une partie de moule fixe.

Par ailleurs, la cavité de moulage présente, de préférence, des plots internes coopérant avec des moyens de positionnement de type échancrure(s) et/ou ouverture(s) pratiquée(s) sur la partie surmoulée de l'insert, et de préférence sur la semelle. On pourrait imaginer par ailleurs pour le maintien de l'insert que chaque broche coopère avec une partie aimantée de l'insert ou encore avec une partie de l'insert rendue adhésive.

Ce qui est important c'est que les moyens de positionnement / indexation fournisse un référentiel fixe de positionnement / indexation à l'intérieur de la cavité de moulage selon au moins deux directions perpendiculaires, et de préférence selon les trois directions de l'espace.

Il s'agit donc d'un positionnement absolu dans le référentiel du surmoulage.

La présente invention porte sur un vitrage, notamment obtenu par la mise en oeuvre du procédé selon l'invention, notamment un vitrage automobile, comportant au moins un élément vitré présentant une zone périphérique munie d'au moins une portion de joint formée d'une matière plastique, ledit joint comportant au moins un insert (voire plusieurs inserts, notamment plusieurs inserts dans une portion unique de joint), cet insert présentant une portion surmoulée positionnée à l'intérieur dudit joint et une portion saillante faisant saillie à l'extérieur dudit joint pour le prépositionnement, le positionnement ou la fixation du vitrage dans une baie qu'il doit fermer, ladite portion surmoulée comprenant une semelle et ladite portion saillante présentant un axe, ledit vitrage étant remarquable en ce que la partie surmoulée de l'insert comporte des moyens de positionnement de type échancrure(s) et/ou ouverture(s) et ladite semelle comporte sur une face tournée vers l'élément vitré au moins une patte d'appui s'étendant en direction de l'élément vitré et venant en contact avec ce dernier et sur une face opposée une embase présentant une face libre supportant ladite partie saillante et n'étant pas recouverte de la matière plastique formant le joint.

L'axe de ladite partie saillante de l'insert est ainsi orienté selon un axe différent de l'axe de démoulage du vitrage surmoulé.

La semelle est, de préférence, positionnée sensiblement parallèle à la surface de l'élément vitré adjacente et l'axe de la partie saillante est, de préférence, orienté sensiblement perpendiculairement au plan moyen de la semelle.

L'embase présente, de préférence, une section transversale inférieure à celle de ladite semelle et l'embase présente en outre, de préférence une épaisseur au moins égale au double de l'épaisseur de ladite semelle.

Le vitrage selon l'invention comporte, de préférence, une pluralité d'inserts et les axes des parties saillantes de deux inserts au moins ne sont pas orientés selon une même direction. En outre l'axe de la partie saillante de chacun de ces deux inserts au moins est orienté selon un axe différent de l'axe de démoulage du vitrage surmoulé.

La présente invention s'applique en particulier aux vitrages non plan, présentant un galbe.

Dans une variante, la semelle, l'embase et la portion saillante sont réalisées d'un seul tenant, notamment en une matière plastique rigide.

Dans une autre variante, la semelle, l'embase et la portion saillante sont réalisées en plusieurs pièces assemblées, en matière plastique, en métal ou en alliage métallique.

D'une manière très avantageuse, la patte d'appui est en compression contre la surface de l'élément vitré. Cela peut s'observer en opérant un découpage du joint du vitrage surmoulé : la configuration de l'insert peut avoir changé par rapport à une position de repos où il ne serait pas comprimé contre la surface de l'élément vitré.

Dans une variante, ladite semelle comporte au moins une patte d'appui d'extrémité formée par au moins un repli de la matière de la semelle (à un extrémité de cette dernière), ce repli se terminant par un retour vers le plan moyen de la semelle et/ou ladite semelle comporte au moins une patte d'appui en volet formée dans la matière de la semelle pour dégager un volet ouvert vers l'élément vitré et se terminant par un retour vers le plan moyen de la semelle.

Dans une variante également, ladite semelle comporte au moins une ouverture sur une face principale et/ou au moins une échancrure notamment à fond semi-circulaire ladite échancrure étant formée dans un bord transversal de la semelle, selon sa ligne longitudinale moyenne (par exemple deux échancrures formées dans deux bords opposées de la semelle, selon sa ligne longitudinale moyenne).

La semelle comporte, de préférence, des moyens de renfort, de type nervures ou bourrelets le long d'au moins deux de ses bords longitudinaux, notamment lorsque la matière constitutive de la semelle et de la (ou des) patte(s) est très souple.

La bordure de la surface libre de l'embase peut comporter des moyens d'étanchéité de type joint torique.

La semelle est d'une manière générale, de préférence de forme rectangulaire et porte l'embase dans sa partie centrale, ladite semelle pouvant comporter des ouvertures pour un meilleur ancrage dans la matière plastique formant le joint.

L'insert présente une portion destinée être surmoulée et à être positionnée à l'intérieur d'un joint et une portion saillante destinée à faire saillie à l'extérieur dudit joint pour le prépositionnement, le positionnement ou la fixation de l'élément vitré dans une baie qu'il doit fermer, ladite portion surmoulée comprenant une semelle et ladite portion saillante présentant un axe, et il est remarquable en ce que la partie surmoulée de l'insert comporte des moyens de positionnement pouvant coopérer avec au moins une broche située dans un moule de surmoulage et ladite semelle comporte sur une face pouvant être tournée vers l'élément vitré au moins une patte d'appui pouvant s'étendre en direction de l'élément vitré et pouvant venir en contact avec ce dernier et comporte sur une face opposée une embase présentant une face libre supportant ladite partie saillante et qui puisse ne pas être recouverte de la matière plastique formant le joint.

Les moyens de positionnement particuliers de cet insert sont destinés à permettre le positionnement absolu de l'insert dans le référentiel de surmoulage. Ils sont, de préférence, positionnés sur la semelle de l'insert.

Pour mieux illustrer l'objet de la présente invention, on va en décrire ci-après plusieurs modes de réalisation particuliers, avec référence aux dessins annexés.

Sur ces dessins,
- la Figure 1 est une vue en perspective d'un vitrage d'angle pour automobile, ledit vitrage étant muni à sa périphérie d'un joint formé par surmoulage avec des inserts de fixation saillants ;
- la Figure 2 est une vue agrandie en coupe partielle, dans la région d'un insert de fixation d'un vitrage du type de celui de la Figure 1 et de son surmoulage, ces derniers se trouvant encore dans le moule, l'insert étant un insert de l'état antérieur de la technique, montré en élévation ;
- la Figure 3 est une vue analogue à la Figure 2 montrant le vitrage dans sa position montée sur la baie d'une carrosserie d'automobile, en cas de serrage extrême de la vis de l'insert coopérant avec la carrosserie ;
- les Figures 4, 5 et 6 représentent un insert de fixation réalisé conformément à un premier mode de réalisation de la présente invention, respectivement en vue de dessus, en vue en coupe selon la ligne longitudinale médiane de l'insert, et en vue en bout ;
- les Figures 7 et 8 sont des vues analogues aux Figures respectivement 2 et 3, avec l'insert conforme au premier mode de réalisation, lequel est montré en coupe sur la Figure 7 et en élévation sur la Figure 8 ;
- la Figure 9 est une vue analogue à la Figure 4 d'un insert conforme à un second mode de réalisation de l'insert selon la présente invention ;
- la Figure 10 est une vue en perspective d'un insert conforme à un troisième mode de réalisation de la présente invention.

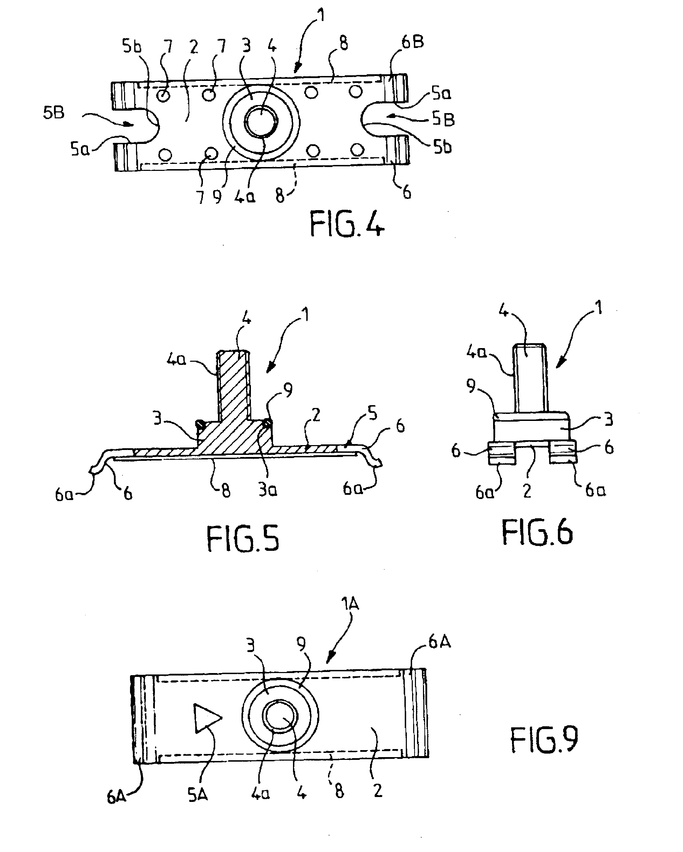

Si l'on se réfère tout d'abord aux Figures 4 à 6, on peut voir que l'on a représenté un insert 1 conforme à un premier mode de réalisation, particulièrement préféré, de la présente invention, l'insert représenté ici étant un insert de fixation.

L'insert 1 est constitué par une plaque ayant généralement la forme d'un rectangle allongé - appelée semelle 2 dans la suite de cette description - laquelle porte, sur l'une de ses faces et de façon centrée, une protubérance en forme de disque - appelée embase 3 dans la suite de cette description - laquelle porte extérieurement et de façon centrée, selon son axe, une tige 4a, en l'occurrence filetée, constituant une portion saillante 4 et devant servir à la fixation du vitrage sur la carrosserie.

Dans l'exemple représenté, la semelle 2, l'embase 3 et la tige forment une pièce d'un seul tenant, étant avantageusement obtenue par moulage d'une matière plastique rigide ou relativement rigide, telle que le polycarbonate ou le polypropylène. La pièce peut cependant tout aussi bien être réalisée en plusieurs parties et être formée par l'assemblage par tout moyen de ces différentes parties, chacune d'elles pouvant entre en métal ou alliage métallique ou en matière plastique.

Par ailleurs, le ou les matériaux constitutifs de l'embase sont le plus avantageusement des matériaux qui sont inoxydables, ou, s'ils ne le sont pas, qui ont subi un traitement de surface anti-corrosion.

A partir de ses deux petits côtés de la semelle 2, sont ménagées dans celle-ci deux échancrures 5 disposées selon son axe longitudinal médian. Chaque échancrure 5 est délimitée par deux bordures longitudinales en regard 5a raccordées par un fond 5b de forme semi-circulaire. Sont ainsi constituées, entre chaque bordure 5a et la bordure longitudinale extérieure de la semelle 2, quatre pattes relativement flexibles 6 qui sont pliées ici à titre d'exemple suivant un angle d'environ 45° par rapport au plan moyen de la semelle 2 et qui sont repliées à leurs extrémités vers le plan moyen de la semelle 2 pour constituer des zones extérieures 6a se situant dans un même plan en vue d'un appui souple sur le vitrage comme cela sera décrit plus en détail ci-après.

La semelle 2 comporte dans sa partie centrale - entre les deux échancrures 5 - le long de ses deux bords longitudinaux, des ouvertures 7, régulièrement réparties, dont le rôle est indiqué plus loin.

Par ailleurs, les deux bords longitudinaux de la semelle 2 dans cette partie centrale sont repliés sur eux-mêmes vers l'extérieur du côté opposé à l'embase 3 pour former des bourrelets ou nervures 8 de renfort. Cette disposition n'est pas toujours nécessaire, la présence des bourrelets ou nervures dépendant du matériau choisi pour la semelle 2.

L'embase 3 présente selon sa bordure circulaire supérieure un chanfrein ou congé 3a pour le logement d'un joint torique d'étanchéité 9, mesure également facultative comme cela sera décrit plus loin.

Dans l'exemple représenté, la tige 4a présente un filetage car l'insert 1 est ici un insert de fixation par vissage. Si l'insert 1 devait uniquement servir à l'indexation du vitrage lors de sa pose sur la carrosserie comme indiqué précédemment, la tige 4a ne comporterait pas un tel filetage.

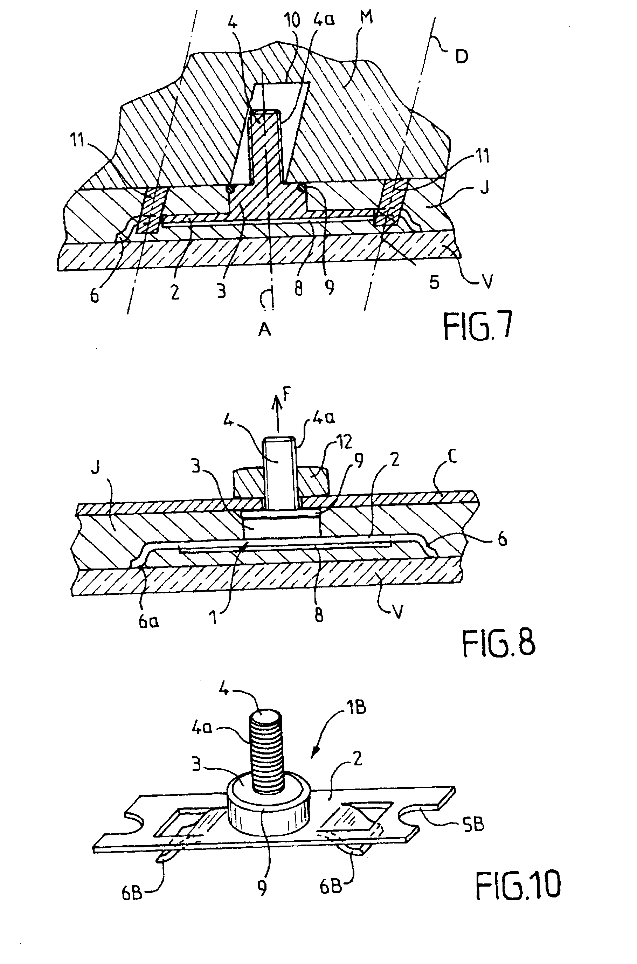

Si l'on se réfère maintenant à la Figure 7, on peut voir que l'on a représenté, en place dans une partie de moule M et avant démoulage, un élément vitré V avec son joint J périphérique surmoulé dans lequel est disposé la partie surmoulée de l'insert 1 qui vient d'être décrit mais pas sa partie saillante.

Sur cette figure, la partie de l'élément vitré illustrée est orientée horizontalement, mais toute autre configuration est bien sûr possible.

Selon l'orientation qui vient d'être considérée, seule la partie supérieure du moule M a été représentée sur la figure 7, ainsi que la partie périphérique de l'élément vitré V dans la région d'un insert 1.

Sur cette figure, on a également représenté l'axe A de la tige 4a de la partie saillante 4 et l'axe de démoulage D de la pièce, c'est-à-dire l'axe suivant lequel la partie mobile supérieure du moule M sera retirée après la formation du surmoulage à l'aide d'une presse (non illustrée), ces deux axes A et D n'étant pas parallèles.

La paroi de la partie supérieure du moule M qui correspond à la surface supérieure du joint telle qu'on peut le voir sur la Figure 1 comporte autant de logements cylindriques 10 qu'il y a d'inserts 1 prévus pour l'élément vitré V doté de son surmoulage, et porte intérieurement (dans sa surface délimitant la cavité de moulage), associées à chaque logement 10, deux broches cylindriques 11 fixées par tout moyen à cette paroi de moule, les axes des logements 10 et des broches 11 étant orientés selon l'axe de démoulage D, et étant disposés de telle sorte qu'en position de moulage, les parties saillantes 4 des inserts 1 viennent se placer dans les logements 10 - comme cela sera décrit ci-après - et les deux broches 11 de section au moins semi-circulaire, voire circulaire, viennent se placer chacune dans une échancrure respective 5B semi-circulaire de la semelle 2 de l'insert 1, permettant ainsi le positionnement et le maintien en position dudit insert 1 dans le moule M, tant pendant la fermeture du moule que pendant toute l'injection.

La surface de l'embase 3 est dimensionnée pour que l'aptitude au démoulage soit acquise dans le cas le plus critique d'inclinaison de l'axe A de la tige 4a de la partie saillante 4 par rapport à l'axe de démoulage D.

Pour réaliser le moulage, on procède de la façon suivante :
- on dispose le vitrage V dans la partie inférieure du moule de la manière connue ;
- on dispose les inserts 1 contre la paroi interne de la partie supérieure du moule, les tiges 4a venant se placer dans les logements 10 du moule M, les embases 3 venant s'appliquer contre le moule M et deux broches 11 du moule bloquant chaque insert 1 en venant se positionner dans les échancrures 5B de ce dernier, un aimant (non illustré) étant éventuellement prévu au fond de la cavité de chaque logement 10 pour permettre de maintenir l'insert 1 pendant la fermeture du moule ;
- on ferme le moule, les pattes flexibles 6 venant en appui souple sur l'élément vitré, pour éviter tout risque d'endommagement de sa surface ainsi que pour s'adapter à toute valeur de galbe locale et absorber les tolérances du galbe de l'élément vitré ; le moule est simplifié par rapport à celui de l'état antérieur de la technique : il n'a plus aucun pavé ou tiroir mobile mais seulement des logements 10 suffisamment grands pour permettre l'ouverture du moule M sans que celui-ci ne viennent en contact avec les tiges 4a lors du démoulage ;
- on effectue le moulage par injection de matière dans la cavité de moulage ; pendant celui-ci, la matière plastique fluide est empêchée d'atteindre la tige 4a par le joint torique 9 procurant l'étanchéité ; toutefois, l'étanchéité peut aussi être obtenue par un contact direct de l'embase 3 avec le moule M, sans le joint 9, en particulier si l'embase 3 est en matière plastique.
- une fois que la cavité de moulage est remplie et que la matière plastique du joint a suffisamment solidifié, la partie mobile du moule est déplacée à l'aide de la presse selon l'axe de démoulage et le moule est ouvert : le vitrage 20 surmoulé de son joint qui incorpore les parties surmoulées des inserts peut être retiré du moule.

Les broches 11 restent en permanence dans la partie de moule à laquelle elles sont fixées : elles ne restent pas sur le vitrage surmoulé ; une cavité de forme complémentaire à chacune de ces broches apparaît ainsi dans le joint à chaque endroit où était positionnée une broche lors de l'injection.

On obtient ainsi un surmoulage maintenant bien la semelle 2 de l'insert 1, laquelle est noyée dans la matière plastique, les ouvertures 7, de forme quelconque, ménagées dans la semelle 2 et débouchant sur les deux faces principales de la semelle améliorant ce maintien par le fait que la matière plastique peut traverser cette dernière.

Le montage des vitrages dotés de leurs joints surmoulés s'effectue de la même façon que dans l'état antérieur de la technique, mais la fixation est plus fiable.

La figure 8 illustre un exemple de montage par vissage à l'aide d'un écrou 12 coopérant avec la partie filetée de la tige 4a, mais le montage est beaucoup plus sûr et beaucoup plus efficace que dans l'art antérieur : il n'y a plus de matière plastique de joint entre la baie de la carrosserie C et la partie surmoulée de l'insert au niveau de la fixation, évitant alors tout risque de déchaussement de l'insert à ce niveau. En cas d'effort selon la flèche F, c'est l'embase 3 qui travaille en compression et non plus la matière plastique du joint.

Par ailleurs, comme le moule du dispositif de surmoulage n'a plus de pavé ou de tiroir mobile, il est beaucoup plus simple à concevoir, à fabriquer et à entretenir.

Si l'on se réfère aux Figures 9 et 10, on voit que l'on a représenté des inserts de montage respectivement 1A et 1B conformes à deux autres modes de réalisation.

L'insert 1A de la Figure 9 ne comporte plus d'échancrures 5B si bien que ses pattes d'appui d'extrémité 6A s'étendent sur toute la longueur de la semelle 2. La fonction de positionnement qui était assurée par les échancrures 5B en coopération avec des plots cylindriques de forme correspondante du moule M est ici assurée par une ouverture 5A ménagée dans la plaque 2 elle-même, de forme triangulaire, en vue d'une coopération avec des plots de moule qui seraient de forme prismatique correspondante. Une forme polygonale autre que la forme triangulaire conviendrait aussi, dès lors que l'ouverture et le plot de la broche présentent des formes complémentaires coopérant l'une avec l'autre pour le maintien de la semelle 2 dans le moule pendant l'injection.

L'insert 1B de la Figure 10 diffère quant à lui de l'insert 1 par le fait que des pattes d'appui en volet 6B, de même orientation que les pattes 6, sont formées par exemple par emboutissage dans la semelle 2 d'un seul tenant avec elle dans le cas d'une semelle métallique ou directement lors du moulage de la semelle 2 lorsqu'elle est en matière plastique, de part et d'autre de l'embase 3, et non plus le long des bordures transversales de la semelle 2. Ces bordures comportent alors simplement des échancrures 5B analogues aux échancrures 5B du premier mode de réalisation.

Par ailleurs, lorsque l'embase 3 et/ou la paroi du moule adjacente lors de l'injection est (ou sont toutes les deux) en matière plastique, il n'est pas forcément nécessaire de prévoir un moyen d'étanchéité au niveau de la surface libre de l'embase ou de la surface de moule adjacente, mais lorsque ces deux éléments sont tous les deux métalliques, il est préférable de prévoir un moyen d'étanchéité de type joint torique, soit au niveau de la bordure de la surface libre de l'embase 3, soit au niveau de la surface du moule, autour du trou par lequel le logement 10 débouche dans la surface du moule.

Il est bien entendu que les modes de réalisation ci-dessus ont été présentés à titre indicatif et non limitatif et que des modifications peuvent être apportées sans que l'on s'écarte pour autant du cadre de la présente invention tel que défini dans les revendications.

## Revendications

1. Procédé de surmoulage d'au moins une portion de joint (J) formée d'une matière plastique sur une partie périphérique d'un élément vitré (V), ledit joint comportant au moins un insert (1), cet insert présentant une portion surmoulée positionnée à l'intérieur dudit joint et une portion saillante (4) faisant saillie à l'extérieur dudit joint pour le prépositionnement, le positionnement ou la fixation de l'élément vitré (V) dans une baie qu'il doit fermer, ladite portion surmoulée comprenant une semelle (2) et ladite portion saillante étant orientée selon un axe (A), ledit procédé comportant :
a- une étape de positionnement de ladite zone périphérique au moins de l'élément vitré dans un moule (M) comportant au moins une partie mobile de moule et au moins une autre partie de moule,
b- une étape de positionnement d'au moins un insert (1) dans le moule de manière que la partie saillante (4) soit positionnée dans un logement (10) formé dans une partie de moule,
c- une étape de fermeture de ladite partie mobile sur une partie fixe de moule de manière à former une cavité de moulage, ladite semelle (2) étant située dans ladite cavité de moulage,
d- une étape d'injection de la matière plastique formant le joint dans ladite cavité de moulage et
e- une étape de démoulage par déplacement de ladite partie mobile de moule selon un axe de démoulage (D) orienté différemment de l'axe (A) de la partie saillante (4),
**caractérisé en ce que** pendant l'injection l'insert est positionné dans la cavité de moulage à l'aide d'au moins une broche (11) coopérant avec un moyen de positionnement (5) situé sur ladite partie surmoulée de manière à ce que ladite semelle (2) comporte sur une face tournée vers l'élément vitré au moins une patte d'appui (6) s'étendant en direction de l'élément vitré et venant en contact avec ce dernier et sur une face opposée une embase (3) présentant une face libre supportant ladite partie saillante (4) et qui n'est pas recouverte de la matière plastique formant le joint
**et en ce que** pendant le démoulage l'ouverture du moule et le retrait du vitrage surmoulé est opéré sans que la partie saillante (4) de l'insert (1) ne vienne en contact avec la paroi dudit logement (10).

2. Procédé selon la revendication précédente, **caractérisé en ce que** pendant l'injection, l'axe de la partie saillante (4) est orienté sensiblement perpendiculairement au plan moyen de la semelle (2).

3. Procédé selon la revendication 1 ou 2, **caractérisé en ce que** pendant l'injection, ladite patte d'appui (6) est en compression contre la surface de l'élément vitré (V).

4. Procédé selon l'une quelconque des revendications 1 à 3, **caractérisé en ce que** pendant l'injection, la face libre de l'embase (3) vient en appui étanche contre la paroi du moule autour du logement (10).

5. Dispositif, notamment pour la mise en oeuvre du procédé selon l'une quelconque des revendications 1 à 4, pour le surmoulage d'au moins une portion de joint (J) formée d'une matière plastique sur une partie périphérique d'un élément vitré (V), ledit joint comportant au moins un insert (1), cet insert présentant une portion surmoulée positionnée à l'intérieur dudit joint et une portion saillante (4) faisant saillie à l'extérieur dudit joint pour le prépositionnement, le positionnement ou la fixation de l'élément vitré dans une baie qu'il doit fermer, ladite portion surmoulée comprenant une semelle (2) et ladite portion saillante présentant un axe (A), ledit dispositif comportant :
i- un moule (M) pour le positionnement de ladite zone périphérique au moins de l'élément vitré, ledit moule comportant au moins une partie mobile de moule qui est mobile selon un axe de démoulage (D) par rapport à une autre partie de moule, lesdites parties de moule coopérant à l'état fermé pour former une cavité de moulage,
ii- une partie de moule comportant au moins un logement (10) débouchant dans ladite cavité de moulage et accueillant ladite partie saillante (4) de l'insert orientée selon un axe différent de l'axe de démoulage,
**caractérisé en ce que** ladite cavité de moulage comporte au moins une broche (11) coopérant avec des moyens de positionnement (5) situés sur ladite partie surmoulée de manière à ce qu'au moins une patte d'appui (6) positionnée sur une face de ladite semelle (2) tournée vers l'élément vitré s'étende en direction de l'élément vitré et entre en contact avec ce dernier lors de l'injection de la matière et que sur une face opposée de ladite semelle (2) une embase (3) présente une face libre supportant ladite partie saillante (4) qui n'est pas recouverte de la matière plastique formant le joint
**et en ce que** le logement (10) est suffisamment grand pour permettre l'ouverture du moule et le retrait du vitrage surmoulé sans que la partie saillante (4) de l'insert (1) ne vienne en contact avec la paroi dudit logement.

6. Dispositif selon la revendication précédente **caractérisé en ce que** le logement (10) est suffisamment grand pour permettre que l'axe de la partie saillante soit orienté sensiblement perpendiculairement au plan moyen de la semelle (2).

7. Dispositif selon la revendication 5 ou 6, **caractérisé en ce que** le logement (10) ne comporte pas de pavé mobile.

8. Dispositif selon l'une quelconque des revendications 5 à 7, **caractérisé en ce que** le logement (10) présente une forme cylindrique orientée selon l'axe de démoulage (D).

9. Dispositif selon l'une quelconque des revendications 5 à 8, **caractérisé en ce que** le logement (10) comporte un aimant ou un électroaimant ou un système d'aspiration pour le maintien de ladite partie saillante (4).

10. Dispositif selon l'une quelconque des revendications 5 à 9, **caractérisé en ce qu**'un logement (10) est formé dans la partie de moule mobile.

11. Dispositif selon l'une quelconque des revendications 5 à 10, **caractérisé en ce qu**'un logement est formé dans une partie de moule fixe.

12. Dispositif selon l'une quelconque des revendications 5 à 11, **caractérisé en ce que** la cavité de moulage présente des plots internes coopérant avec des moyens de positionnement (5) de type échancrure(s) (5B) ou ouverture(s) (5A) pratiquée(s) sur la partie surmoulée de l' insert (1).

13. Vitrage (20), notamment obtenu par la mise en oeuvre du procédé selon l'une quelconque des revendications 1 à 4, notamment vitrage automobile, comportant au moins un élément vitré (V) présentant une zone périphérique munie d'au moins une portion de joint (J) formée d'une matière plastique, ledit joint comportant au moins un insert (1), cet insert présentant une portion surmoulée positionnée à l'intérieur dudit joint et une portion saillante (4) faisant saillie à l'extérieur dudit joint pour le prépositionnement, le positionnement ou la fixation du vitrage dans une baie qu'il doit fermer, ladite portion surmoulée comprenant une semelle (2) et ladite portion saillante présentant un axe (A),
**caractérisé en ce que** la partie surmoulée de l'insert (1) comporte des moyens de positionnement (5) de type échancrure(s) ou ouverture(s) et ladite semelle (2) comporte sur une face tournée vers l'élément vitré (V) au moins une patte d'appui (6) s'étendant en direction de l'élément vitré et venant en contact avec ce dernier et sur une face opposée une embase (3) présentant une face libre supportant ladite partie saillante et n'étant pas recouverte de la matière plastique formant le joint.

14. Vitrage (20) selon la revendication précédente **caractérisé en ce que** ladite semelle (2) est positionnée sensiblement parallèle à la surface de l'élément vitré adjacente.

15. Vitrage (20) selon la revendication 13 ou 14, **caractérisé en ce que** l'embase (3) présente une épaisseur égale au moins au double de l'épaisseur de ladite semelle (2).

16. Vitrage (20) selon l'une quelconque des revendications 13 à 15, **caractérisé en ce qu**'il comporte une pluralité d'inserts (1) et en ce que les axes des parties saillantes de deux inserts au moins ne sont pas orientés selon une même direction.

17. Vitrage (20) selon l'une quelconque des revendications 13 à 16, **caractérisé en ce que** la semelle (2), l'embase (3) et la portion saillante (4) sont réalisées d'un seul tenant, notamment en une matière plastique rigide.

18. Vitrage (20) selon l'une quelconque des revendications 13 à 16, **caractérisé en ce que** la semelle (2), l'embase (3) et la portion saillante (4) sont réalisées en plusieurs pièces assemblées, en matière plastique, en métal ou en alliage métallique.

19. Vitrage (20) selon l'une quelconque des revendications 13 à 18, **caractérisé en ce que** ladite patte d'appui (6) est en compression contre la surface de l'élément vitré (V).

20. Vitrage (20) selon l'une quelconque des revendications 13 à 19, **caractérisé en ce que** ladite semelle (2) comporte au moins une patte d'appui d'extrémité (6A) formée par au moins un repli de la matière de la semelle (2), ce repli se terminant par un retour vers le plan moyen de la semelle (2) et/ou **en ce que** ladite semelle (2) comporte au moins une patte d'appui en volet (6B) formée dans la matière de la semelle (2) pour dégager un volet ouvert vers l'élément vitré et se terminant par un retour vers le plan moyen de la semelle (2).

21. Vitrage (20) selon l'une quelconque des revendications 13 à 20, **caractérisé en ce que** ladite semelle (2) comporte au moins une ouverture (5A) sur une face principale et/ou au moins une échancrure (5B) notamment à fond semi-circulaire ladite échancrure étant formée dans un bord transversal de la semelle (2), selon sa ligne longitudinale moyenne.

22. Vitrage (20) selon l'une quelconque des revendications 13 à 21, **caractérisé en ce que** la semelle (2) comporte des moyens de renfort (8), de type nervures ou bourrelets le long d'au moins deux de ses bords longitudinaux.

23. Vitrage (20) selon l'une quelconque des revendications 13 à 22, **caractérisé en ce que** la bordure de la surface libre de l'embase (3) comporte des moyens d'étanchéité de type joint torique (9).

24. Vitrage (20) selon l'une quelconque des revendications 13 à 23, **caractérisé en ce que** la semelle (2) est de forme rectangulaire et porte l'embase (3) dans sa partie centrale, ladite semelle (2) pouvant comporter des ouvertures (7) pour un meilleur ancrage dans la matière plastique formant le joint.

## Patentansprüche

1. Verfahren zum Formen von mindestens einem Nahtteil (J), das aus einem Kunststoffmaterial an einem Randbereich eines Glaselements (V) gebildet ist, wobei das Nahtteil mindestens einen Einsatz (1) umfasst, wobei der Einsatz einen umformten Teil, der im Inneren des Nahtteils positioniert ist, und einen vorstehenden Teil (4), der nach außen aus dem Nahtteil vorsteht, zum Vorpositionieren, Positionieren oder Befestigen des Glaselements (V) in einer Öffnung, die es schließen soll, aufweist, wobei der umformten Teil eine Grundplatte (2) umfasst und der vorstehende Teil nach einer Achse (A) ausgerichtet ist, wobei das Verfahren folgende Schritte umfasst:
a- Positionieren des Randbereichs zumindest des Glaselements in einer Form (M), die mindestens ein bewegliches Formteil und mindestens ein anderes Formteil umfasst,
b- Positionieren von mindestens einem Einsatz (1) in der Form, sodass der vorstehende Teil (4) in einer Aufnahme (10) positioniert ist, die in einem Formteil gebildet ist,
c- Schließen des beweglichen Formteils auf einem festgelegten Formteil, sodass ein Formhohlraum gebildet wird, wobei die Grundplatte (2) in dem Formhohlraum angeordnet ist,
d- Einspritzen des Kunststoffmaterials, das das Nahtteil in dem Formhohlraum bildet, und
e- Entformen durch Bewegen des beweglichen Formteils entlang einer Entformungsachse (D), die von der Achse (A) des vorstehenden Teils (4) unterschiedlich ausgerichtet ist,
**dadurch gekennzeichnet, dass** der Einsatz beim Einspritzen mithilfe mindestens eines Stifts (11) in dem Formhohlraum positioniert ist, der mit einem Positionierungsmittel (5) zusammenwirkt, das an dem umformten Teil angeordnet ist, sodass die Grundplatte (2) auf einer Fläche, die dem Glaselement zugewandt ist, mindestens eine Befestigungsstütze (6), die sich in Richtung des Glaselements erstreckt und mit diesem in Kontakt gelangt, umfasst und auf einer gegenüberliegenden Seite einen Sockel (3) umfasst, der eine freie Fläche aufweist, die den vorstehenden Teil (4) stützt, und die nicht von dem Kunststoffmaterial, das das Nahtteil bildet, bedeckt ist,
und **dadurch gekennzeichnet, dass** beim Entformen, das Öffnen der Form und das Herausnehmen der umformten Glastafel durchgeführt werden, ohne dass der vorstehende Teil (4) des Einsatzes (1) mit der Wandung der Aufnahme (10) in Kontakt gelangt.

2. Verfahren nach dem vorhergehenden Anspruch, **dadurch gekennzeichnet, dass** die Achse des vorstehenden Teils (4) beim Einspritzen im Wesentlichen senkrecht zu der mittleren Ebene der Grundplatte (2) ausgerichtet ist.

3. Verfahren nach Anspruch 1 oder 2, **dadurch gekennzeichnet, dass** die Befestigungsstütze (6) beim Einspritzen gegen die Oberfläche des Glaselements (V) gedrückt wird.

4. Verfahren nach einem der Ansprüche 1 bis 3, **dadurch gekennzeichnet, dass** die freie Fläche des Sockels (3) beim Einspritzen dicht an der Wandung der Form um die Aufnahme (10) herum anliegt.

5. Vorrichtung, insbesondere für das Durchführen des Verfahrens nach einem der Ansprüche 1 bis 4 zum Formen mindestens eines Nahtteils (J), das aus einem Kunststoffmaterial an einem Randbereich eines Glaselements (V) gebildet ist, wobei das Nahtteil mindestens einen Einsatz (1) umfasst, wobei der Einsatz einen umformten Teil aufweist, der im Inneren des Nahtteils positioniert ist, und einen vorstehenden Teil (4), der nach außen aus dem Nahtteil vorsteht, zum Vorpositionieren, Positionieren oder Befestigen des Glaselements in einer Öffnung, die es schließen soll, aufweist, wobei der umformte Teil eine Grundplatte (2) umfasst, und der vorstehende Teil eine Achse (A) aufweist, wobei die Vorrichtung Folgendes umfasst:
i- eine Form (M) zum Positionieren des Randbereichs mindestens des Glaselements, wobei die Form mindestens ein bewegliches Formteil umfasst, das entlang einer Entformungsachse (D) in Bezug auf ein anderes Formteil beweglich ist, wobei die Formteile im geschlossenen Zustand zusammenwirken, um einen Formhohlraum zu bilden,
ii- ein Formteil, das mindestens eine Aufnahme (10) umfasst, die in den Formhohlraum mündet und den vorstehenden Teil (4) des Einsatzes aufnimmt, der entlang einer anderen Achse als der Entformungsachse ausgerichtet ist,
**dadurch gekennzeichnet, dass** der Formhohlraum mindestens einen Stift (11) umfasst, der mit Positionierungsmitteln (5) zusammenwirkt, die an dem umformten Teil angeordnet sind, sodass mindestens eine Befestigungsstütze (6), die auf einer Fläche der Grundplatte (2) positioniert ist, die dem Glaselement zugewandt ist, sich in Richtung des Glaselements erstreckt und mit letzterem beim Einspritzen des Materials in Kontakt gelangt, und sodass an einer gegenüberliegenden Seite der Grundplatte (2) ein Sockel (3) eine freie Fläche aufweist, die den vorstehenden Teil (4) stützt, und die nicht von dem Kunststoffmaterial bedeckt ist, das das Nahtteil bildet,
und **dadurch gekennzeichnet, dass** die Aufnahme (10) ausreichend groß ist, um das Öffnen der Form und das Herausnehmen der umformten Glastafel zu ermöglichen, ohne dass der vorstehende Teil (4) des Einsatzes (1) mit der Wandung der Aufnahme in Kontakt gelangt.

6. Vorrichtung nach dem vorhergehenden Anspruch, **dadurch gekennzeichnet, dass** die Aufnahme (10) ausreichend groß ist, um zu ermöglichen, dass die Achse des vorstehenden Teils im Wesentlichen senkrecht zu der mittleren Ebene der Grundplatte (2) ausgerichtet ist.

7. Vorrichtung nach Anspruch 5 oder 6, **dadurch gekennzeichnet, dass** die Aufnahme (10) kein bewegliches Einlegeteil umfasst.

8. Vorrichtung nach einem der Ansprüche 5 bis 7, **dadurch gekennzeichnet, dass** die Aufnahme (10) eine zylindrische Form aufweist, die entlang der Entformungsachse (D) ausgerichtet ist.

9. Vorrichtung nach einem der Ansprüche 5 bis 8, **dadurch gekennzeichnet, dass** die Aufnahme (10) einen Magneten oder einen Elektromagneten oder ein Saugsystem zum Halten des vorstehenden Teils (4) umfasst.

10. Vorrichtung nach einem der Ansprüche 5 bis 9, **dadurch gekennzeichnet, dass** eine Aufnahme (10) in dem beweglichen Formteil gebildet ist.

11. Vorrichtung nach einem der Ansprüche 5 bis 10, **dadurch gekennzeichnet, dass** eine Aufnahme in dem festgelegten Formteil gebildet ist.

12. Vorrichtung nach einem der Ansprüche 5 bis 11, **dadurch gekennzeichnet, dass** der Formhohlraum innere Steckstellen aufweist, die mit Positionierungsmitteln (5) zusammenwirken, die als Aussparung(en) (5B) oder Öffnung(en) (5A) am umformten Teil des Einsatzes (1) ausgebildet sind.

13. Glastafel (20), insbesondere erhalten durch das Durchführen des Verfahrens nach einem der Ansprüche 1 bis 4, insbesondere Glastafel für ein Kraftfahrzeug, die mindestens ein Glaselement (V) umfasst, das einen Randbereich aufweist, der mit mindestens einem Nahtteil (J) versehen ist, das aus einem Kunststoffmaterial gebildet ist, wobei das Nahtteil mindestens einen Einsatz (1) umfasst, wobei der Einsatz einen umformten Teil aufweist, der im Inneren des Nahtteils positioniert ist, und einen vorstehenden Teil (4), der nach außen aus dem Nahtteil vorsteht, zum Vorpositionieren, Positionieren und Befestigen der Glastafel in einer Öffnung, die sie verschließen soll, umfasst, wobei der umformte Teil eine Grundplatte (2) umfasst, und der vorstehende Teil eine Achse (A) aufweist,
**dadurch gekennzeichnet, dass** der umformte Teil des Einsatzes (1) Positionierungsmittel (5) umfasst, die als Aussparung(en) oder Öffnung(en) ausgebildet sind, und die Grundplatte (2) auf einer Seite, die dem Glaselement (V) zugewandt ist, mindestens eine Befestigungsstütze (6), die sich in Richtung des Glaselements erstreckt und mit letzterem in Kontakt gelangt, umfasst und auf einer gegenüberliegenden Seite einen Sockel (3) umfasst, der eine freie Fläche aufweist, die den vorstehenden Teil stützt und nicht von dem Kunststoffmaterial bedeckt ist, das das Nahtteil bildet.

14. Glastafel (20) nach dem vorhergehenden Anspruch, **dadurch gekennzeichnet, dass** die Grundplatte (2) im Wesentlichen parallel zu der Fläche des angrenzenden Glaselements positioniert ist.

15. Glastafel (20) nach Anspruch 13 oder 14, **dadurch gekennzeichnet, dass** der Sockel (3) eine Dicke aufweist, die mindestens gleich dem Doppelten der Dicke der Grundplatte (2) ist.

16. Glastafel (20) nach einem der Ansprüche 13 bis 15, **dadurch gekennzeichnet, dass** sie eine Vielzahl Einsätze (1) umfasst, und **dadurch gekennzeichnet, dass** die Achsen der vorstehenden Teile von mindestens zwei Einsätzen nicht in gleicher Richtung ausgerichtet sind.

17. Glastafel (20) nach einem der Ansprüche 13 bis 16, **dadurch gekennzeichnet, dass** die Grundplatte (2), der Sockel (3) und der vorstehende Teil (4) aus einem Stück, insbesondere aus einem steifen Kunststoffmaterial gefertigt sind.

18. Glastafel (20) nach einem der Ansprüche 13 bis 16, **dadurch gekennzeichnet, dass** die Grundplatte (2), der Sockel (3) und der vorstehende Teil (4) aus mehreren zusammengesetzten Stücken aus Kunststoffmaterial, Metall oder einer Metalllegierung gefertigt sind.

19. Glastafel (20) nach einem der Ansprüche 13 bis 18, **dadurch gekennzeichnet, dass** die Befestigungsstütze (6) gegen die Oberfläche des Glaselements (V) gedrückt wird.

20. Glastafel (20) nach einem der Ansprüche 13 bis 19, **dadurch gekennzeichnet, dass** die Grundplatte (2) mindestens eine Endbefestigungsstütze (6A) umfasst, der aus mindestens einer Falte des Materials der Grundplatte (2) gebildet ist, wobei die Falte mit einer Biegung zurück zur mittleren Ebene der Grundplatte (2) abschließt, und/oder **dadurch gekennzeichnet, dass** die Grundplatte (2) mindestens eine Klappbefestigungsstütze (6B) umfasst, der aus dem Material der Grundplatte (2) gebildet ist, um eine offene Klappe in Richtung des Glaselements darzustellen, und die mit einer Biegung zurück zur mittleren Ebene der Grundplatte (2) abschließt.

21. Glastafel (20) nach einem der Ansprüche 13 bis 20, **dadurch gekennzeichnet, dass** die Grundplatte (2) mindestens eine Öffnung (5A) an einer Hauptfläche und/oder mindestens eine Aussparung (5B) insbesondere mit halbrunder Grundform umfasst, wobei die Aussparung (5B) in einem transversalen Rand der Grundfläche entlang ihrer mittleren Längslänge gebildet ist.

22. Glastafel (20) nach einem der Ansprüche 13 bis 21, **dadurch gekennzeichnet, dass** die Grundplatte (2) Verstärkungsmittel (8) umfasst, die als Rippen oder Wulste entlang mindestens zwei ihrer Längskanten ausgebildet sind.

23. Glastafel (20) nach einem der Ansprüche 13 bis 22, **dadurch gekennzeichnet, dass** die Umrandung der freien Fläche des Sockels (3) Dichtungsmittel umfasst, die als Dichtungsringe (9) ausgebildet sind.

24. Glastafel (20) nach einem der Ansprüche 13 bis 23, **dadurch gekennzeichnet, dass** die Grundplatte (2) eine rechtwinklige Form aufweist und den Sockel (3) auf ihrem mittleren Teil trägt, wobei die Grundplatte (2) Öffnungen (7) zum besseren Verankern in dem Kunststoffmaterial, das das Nahtteil bildet, umfassen kann.

## Claims

1. A method of overmolding at least one portion of seal (J) made of a plastic, onto a peripheral part of a glazed element (V), said seal comprising at least one insert (1), this insert having an overmolded portion positioned inside said seal and a projecting portion (4) projecting out of said seal for prepositioning, positioning or fixing the glazed element (V) in an aperture that it is to close, said overmolded portion comprising a baseplate (2) and said projecting portion being oriented along an axis (A), said method involving:
a - a step of positioning said peripheral region at least of the glazed element in a mold (M) comprising at least one moving mold part and at least one other mold part,
b - a step of positioning at least one insert (1) in the mold in such a way that the projecting part (4) is positioned in a housing (10) formed in a mold part,
c - a step of closing said moving part onto a fixed mold part so as to form a molding cavity,
said baseplate (2) being situated in said molding cavity,
d - a step of injecting plastic of which the seal is made into said molding cavity, and
e - a step of releasing from the mold by moving said moving mold part along a mold-release axis (D) oriented differently to the axis (A) of the projecting part (4),
**characterized in that**, during injection, the insert is positioned in the molding cavity using at least one pin (11) collaborating with a positioning means (5) situated on said overmolded part so that said baseplate (2) comprises, on a face facing toward the glazed element, at least one bearing tab (6) extending toward the glazed element and coming into contact therewith and, on an opposite face, a mount (3) having a free face supporting said projecting part (4) and which is not covered with the plastic of which the seal is made
and **in that** during release from the mold, the mold is opened and the overmolded glazing removed without the projecting part (4) of the insert (1) coming into contact with the wall of said housing (10).

2. The method as claimed in the preceding claim, **characterized in that**, during injection, the axis of the projecting part (4) is oriented substantially at right angles to the mid-plane of the baseplate (2).

3. The method as claimed in claim 1 or 2, **characterized in that**, during injection, said bearing tab (6) is compressed against the surface of the glazed element (V).

4. The method as claimed in any one of claims 1 to 3, **characterized in that**, during injection, the free face of the mount (3) bears in a sealed manner against the wall of the mold around the housing (10).

5. A device, particularly for implementing the method as claimed in any one of claims 1 to 4, for overmolding at least one portion of seal (J) made of a plastic, onto a peripheral part of a glazed element (V), said seal comprising at least one insert (1), this insert having an overmolded portion positioned inside said seal and a projecting portion (4) projecting out of said seal for prepositioning, positioning or fixing the glazed element (V) in an aperture that it is to close, said overmolded portion comprising a baseplate (2) and said projecting portion having an axis (A), said device comprising:
i - a mold (M) for positioning said peripheral region at least of the glazed element, said mold comprising at least one moving mold part which is able to move along a mold-release axis (D) with respect to another mold part, said mold parts collaborating with one another in the closed state in order to form a molding cavity,
ii - a mold part comprising at least one housing (10) opening into said molding cavity and accommodating said projecting part (4) of the insert which part is oriented along a different axis to the mold-release axis,
**characterized in that** said molding cavity comprises at least one pin (11) collaborating with positioning means (5) which are situated on said overmolded part in such a way that at least one bearing tab (6) positioned on one face of said baseplate (2) facing toward the glazed element extends toward the glazed element and comes into contact therewith when the material is being injected and that, on an opposite face of said baseplate (2), a mount (3) has a free face supporting said projecting part (4) which is not covered with the plastic of which the seal is made,
and **in that** the housing (10) is large enough that the mold can be opened and the overmolded glazing removed without the projecting part (4) of the insert (1) coming into contact with the wall of said housing.

6. The device as claimed in the preceding claim, **characterized in that** the housing (10) is large enough that the axis of the projecting part can be oriented substantially at right angles to the mid-plane of the baseplate (2).

7. The device as claimed in claim 5 or 6, **characterized in that** the housing (10) has no moving block.

8. The device as claimed in any one of claims 5 to 7, **characterized in that** the housing (10) is of cylindrical shape oriented along the mold-release axis (D).

9. The device as claimed in any one of claims 5 to 8, **characterized in that** the housing (10) comprises a magnet or an electromagnet or a suction system for holding said projecting part (4) in place.

10. The device as claimed in any one of claims 5 to 9, **characterized in that** a housing (10) is formed in the moving mold part.

11. The device as claimed in any one of claims 5 to 10, **characterized in that** a housing is formed in a fixed mold part.

12. The device as claimed in any one of claims 5 to 11, **characterized in that** the molding cavity has internal pads collaborating with positioning means (5) of the notch(es) (5B) or opening(s) (5A) type which is (are) made in the overmolded part of the insert (1).

13. A glazing (20), particularly obtained by implementing the method as claimed in any one of claims 1 to 4, particularly a motor vehicle glazing, comprising at least one glazed element (V) having a peripheral region equipped with at least one portion of seal (J) made of a plastic, said seal comprising at least one insert (1), this insert having an overmolded portion positioned inside said seal and a projecting portion (4) projecting out of said seal for prepositioning, positioning or fixing the glazing in an aperture that it is to close, said overmolded portion comprising a baseplate (2) and said projecting portion having an axis (A),
**characterized in that** the overmolded part of the insert (1) comprises positioning means (5) of the notch(es) or opening(s) type and said baseplate (2) comprises, on a face facing toward the glazed element (V), at least one bearing tab (6) extending toward the glazed element and coming into contact therewith and, on an opposite face, a mount (3) having a free face supporting said projecting part and not being covered with the plastic of which the seal is made.

14. The glazing (20) as claimed in the preceding claim, **characterized in that** said baseplate (2) is positioned substantially parallel to the adjacent surface of the glazed element.

15. The glazing (20) as claimed in claim 13 or 14, **characterized in that** the mount (3) has a thickness equal to at least twice the thickness of said baseplate (2).

16. The glazing (20) as claimed in any one of claims 13 to 15, **characterized in that** it comprises a plurality of inserts (1), and **in that** the axes of the projecting parts of at least two inserts are not oriented in the same direction.

17. The glazing (20) as claimed in any one of claims 13 to 16, **characterized in that** the baseplate (2), the mount (3) and the projecting portion (4) are made as a single piece, particularly from a rigid plastic.

18. The glazing (20) as claimed in any one of claims 13 to 16, **characterized in that** the baseplate (2), the mount (3) and the projecting portion (4) are made as several assembled pieces made of plastic, metal or metal alloy.

19. The glazing (20) as claimed in any one of claims 13 to 18, **characterized in that** said bearing tab (6) is compressed against the surface of the glazed element (V).

20. The glazing (20) as claimed in any one of claims 13 to 19, **characterized in that** said baseplate (2) comprises at least one end bearing tab (6A) formed of at least one fold of the material of the baseplate (2), this fold ending in a turn back toward the mid-plane of the baseplate (2) and/or **in that** said baseplate (2) comprises at least one flap-like bearing tab (6B) formed in the material of the baseplate (2) to create a flap open toward the glazed element and ending in a turn back toward the mid-plane of the baseplate (2).

21. The glazing (20) as claimed in any one of claims 13 to 20, **characterized in that** said baseplate (2) comprises at least one opening (5A) on a main face and/or at least one notch (5B), particularly one with a semicircular bottom, said notch being formed in a transverse edge of the baseplate (2), along its longitudinal mid-line.

22. The glazing (20) as claimed in any one of claims 13 to 21, **characterized in that** the baseplate (2) comprises reinforcing means (8) of the rib or bead type along at least two of its longitudinal edges.

23. The glazing (20) as claimed in any one of claims 13 to 22, **characterized in that** the border of the free surface of the mount (3) comprises sealing means of the O-ring type (9).

24. The glazing (20) as claimed in any one of claims 13 to 23, **characterized in that** the baseplate (2) is a rectangular shape and bears the mount (3) in its central part, said baseplate (2) potentially having openings (7) for improved anchorage in the plastic of which the seal is made.
